# EUROPEAN PATENT APPLICATION

(11) **EP 4 645 260 A1**
(43) Date of publication of application: **05.11.2025**
(21) Application number: 24275049.5
(22) Date of filing: 02.05.2024
(51) Int. Cl.: G06V 20/56

(54) **CONSTRUCTING A THREE-DIMENSIONAL POINT CLOUD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present disclosure relates to a computer-implemented method of constructing a three-dimensional point cloud of a real-world environment in which an entity operates. The computer-implemented method comprises: receiving a first hyperspectral image from a first hyperspectral camera, and a second hyperspectral image from a second hyperspectral camera, wherein the first and second hyperspectral cameras are mounted to the entity; determining positions of regions in the first hyperspectral image and positions of the regions in the second hyperspectral image; determining three-dimensional positions associated with each region based on the respective positions of the regions in each of the first and second hyperspectral images, a separation distance between the first and second hyperspectral cameras, and an orientation angle of each of the first and second hyperspectral cameras; and constructing the three-dimensional point cloud to include a point at each determined three-dimensional positions.

## Description

### FIELD OF THE INVENTION

The present invention relates to methods of generating point clouds.

### BACKGROUND

Typically, three-dimensional point clouds are used to create a map of an environment in which an entity operates. An autonomous system of the entity can then use the three-dimensional point cloud to interpret the environment around it.

Three-dimensional point clouds are often created using sensors such as LiDAR sensors and RADAR sensors. However, such sensor modalities are limited in various ways, e.g. LiDAR becomes unreliable when raining.

### SUMMARY

Embodiments of the present invention are intended to address the above technical problems.

According to an aspect of the present disclosure, there is provided a computer-implemented method of constructing a three-dimensional point cloud of a real-world environment in which an entity operates, the computer-implemented method comprising: receiving a first hyperspectral image from a first hyperspectral camera, and a second hyperspectral image from a second hyperspectral camera, wherein the first and second hyperspectral cameras are mounted to the entity; determining positions of regions in the first hyperspectral image and positions of the regions in the second hyperspectral image; determining three-dimensional positions associated with each region based on the respective positions of the regions in each of the first and second hyperspectral images, a separation distance between the first and second hyperspectral cameras, and an orientation angle of each of the first and second hyperspectral cameras; and constructing the three-dimensional point cloud to include a point at each determined three-dimensional positions.

Advantageously, using images to generate the three-dimensional point cloud is superior to using LiDAR and RADAR when the objects are visible. Hyperspectral images take account of materials of the objects too in contrast to RGB images, for example. In this way, a point cloud derived from hyperspectral images will be more accurate. An example case where hyperspectral images are superior is where objects are camouflaged with a background. RGB points clouds may not distinguish the object from a background of the same colour. Using hyperspectral images will take account of the materials of the object and the background, which will be able to distinguish the object from the background better and then the resulting three-dimensional point cloud will be more accurate. This is particularly beneficial in military environments where camouflaging objects is common.

In an embodiment, determining positions of regions in the first hyperspectral image and positions of the regions in the second hyperspectral image comprises: finding a one-to-one best match between hyperspectral signatures of pixels in the first hyperspectral image and pixels in the second hyperspectral image; determining respective positions of the matched pixels in each of the first and second hyperspectral images; and identifying the matched pixels as corresponding to the region.

In an embodiment, finding the one-to-one best match between hyperspectral signatures of pixels in the first hyperspectral image and pixels in the second hyperspectral image comprises: applying one or more geometric rules to validate matched pixels based on one or more geometric constraints, wherein optionally the one or more geometric constraints include chirality, maintaining direction relative to other matched pixels, or orientation relative to other matched pixels.

In an embodiment, finding a one-to-one best match between pixels in the first hyperspectral image and pixels in the second hyperspectral image comprises: comparing the hyperspectral signature of each pixel of the first hyperspectral image with the hyperspectral signature of each pixel in the second hyperspectral image using a rules-based comparison algorithm, wherein each hyperspectral signature includes a plurality of frequency bands covering infrared frequencies, visible frequencies, and ultraviolet frequencies.

In an embodiment, finding a one-to-one best match between pixels in the first hyperspectral image and pixels in the second hyperspectral image comprises: applying each pixel from the respective first and second hyperspectral images to a neural network model trained to compare hyperspectral signatures of two or more pixels to determine best matches between the respective pixels of the first and second hyperspectral images.

In an embodiment, finding a one-to-one best match between pixels in the first hyperspectral image and pixels in the second hyperspectral image comprises: applying the pixels from the respective first and second hyperspectral images to an unsupervised machine learning model to determine best matches between the respective pixels of the first and second hyperspectral images.

In an embodiment, determining positions of regions in the first hyperspectral image and positions of the regions in the second hyperspectral image comprises: clustering matched pixels from each of the first and second hyperspectral images into groups; identifying each region as one of the groups; and determining a position of each region in each of the first and second hyperspectral images.

In an embodiment, identifying each region as one of the groups comprises: validating a group as the region when one or more geometric rules are satisfied; and disregarding a group as the region when the one or more geometric rules are not satisfied, wherein optionally the one or more geometric rules include chirality of the matched region, maintaining direction relative to other matched regions, or orientation relative to other matched regions.

In an embodiment, identifying the region as one of the groups comprises: comparing a geometry of the respective groups in the first and second hyperspectral images using a rules-based comparison algorithm.

In an embodiment, identifying the region as one of the groups comprises: applying the groups, from each of the respective first and second hyperspectral images, to a neural network model trained to compare groups between hyperspectral images to determine a best matched group between the hyperspectral images.

In an embodiment, identifying the region as one of the groups comprises: applying the groups, from each of the respective first and second hyperspectral image, to an unsupervised machine learning model to determine a best matched group between the hyperspectral images.

In an embodiment, determining three-dimensional positions associated with each region based on the respective positions of the regions in each of the first and second hyperspectral images, a separation distance between the first and second hyperspectral cameras, and an orientation angle of each of the first and second hyperspectral cameras, comprises: calculating the three-dimensional positions of the matched pixels from the first and second hyperspectral images using the positions of the matched pixels in the first hyperspectral image, the positions of the matched pixels in the second hyperspectral image, the separation distance between the first and second hyperspectral cameras, and the orientations of the first and second hyperspectral cameras using trigonometry; and using the calculated three-dimensional positions of the matched pixels corresponding to the region for the three-dimensional position of the region.

According to an aspect of the present disclosure, there is provided a computer-implemented method of controlling a autonomous system of an entity, the computer-implemented method comprising: constructing a three-dimensional point cloud of a real-world environment using the computer-implemented method of any preceding aspect or embodiment; classifying one of the regions as an object using a trained classifier; and moving the autonomous system of the entity based on a position of the object.

According to an aspect of the present disclosure, there is provided a transitory, or non-transitory, computer-readable medium having instructions stored thereon that, when executed by one or more processors, cause the one or more processors to perform the computer-implemented method of any preceding aspect or embodiment.

According to an aspect of the present disclosure, there is provided an entity comprising: a body; a first hyperspectral camera mounted to the body; a second hyperspectral camera mounted to the body at a separation distance from the first hyperspectral camera; a autonomous system; a processor; and storage having instructions stored thereon that, when executed by the processor, cause the processor to control the autonomous system by executing the computer-implemented method of any preceding aspect or embodiment.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 shows a schematic block diagram of an entity, according to at least one embodiment;
Figure 2 shows a three-dimensional point cloud of a real-world environment in which the entity operates and showing an object included in the real-world environment, according to at least one embodiment;
Figure 3 shows a schematic diagram of first and second hyperspectral images captured from respective first and second hyperspectral cameras from the entity of Figure 1, according to at least one embodiment;
Figure 4 shows a similar schematic diagram to Figure 3 of first and second hyperspectral images captured from respective first and second hyperspectral cameras from the entity of Figure 1, according to at least one embodiment;
Figure 5 shows a hyperspectral signature from a pixel of one of the hyperspectral images from Figures 3 and 4;
Figure 6 shows a schematic diagram of first and second hyperspectral cameras used for determining a three-dimensional position of an object relative thereto, according to at least one embodiment;
Figure 7 shows a flow chart summarising a computer-implemented method of constructing a three-dimensional point cloud of a real-world environment in which an entity operates, according to at least one embodiment; and
Figure 8 shows a flow chart summarising a computer-implemented method of controlling a autonomous system of an entity.

### DETAILED DESCRIPTION

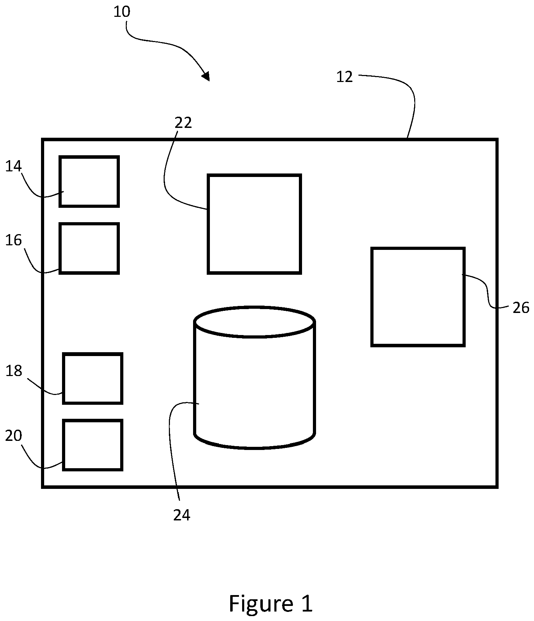

With reference to Figure 1, an entity 10 comprises a body 12, a first camera 14, a second camera 16, a first hyperspectral camera 18, a second hyperspectral camera 20, a processor 22, storage 24, and an autonomous system 26.

The entity may be a military vehicle. The military vehicle may be a tank or other armored vehicle, for example.

The first camera 14 and the second camera 16 are red, green, and blue, (RGB) cameras. A separation distance between the first and second cameras 14, 16, is known. The orientations of the first and second cameras 14, 16, is known. A separation distance between the first and second hyperspectral cameras 18, 20, is known. The orientations of the first and second hyperspectral cameras 18, 20, is known. The first and second cameras 14, 16, are each configured to capture an image, where the image is an RGB image or a grayscale image. In other words, the image is one of a three-channel image and a single channel image. The first and second hyperspectral cameras 16, 18,

The storage 24 may be non-transitory computer readable media. The storage 24 may have instructions stored thereon that when executed by the processor 22 cause the processor to perform any of the computer-implemented methods (which may be called methods herein) described herein.

The autonomous system 26 may be any system that may work autonomously based on the images or hyperspectral images. The autonomous system may work by moving. The autonomous system 26 may be an autonomous driving system when the entity is an autonomous vehicle. Alternatively, the autonomous system may be a robot arm or other robot system configured to move in the real-world environment.

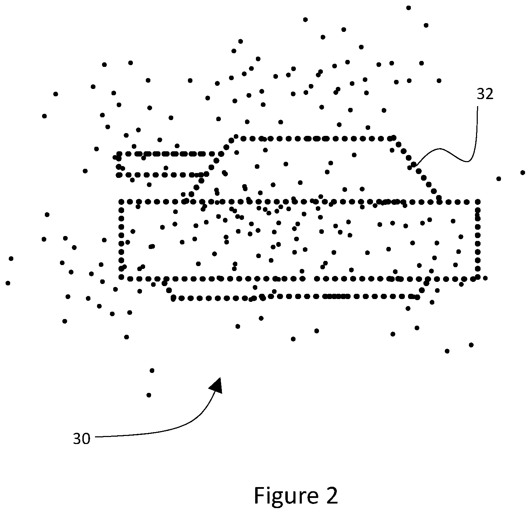

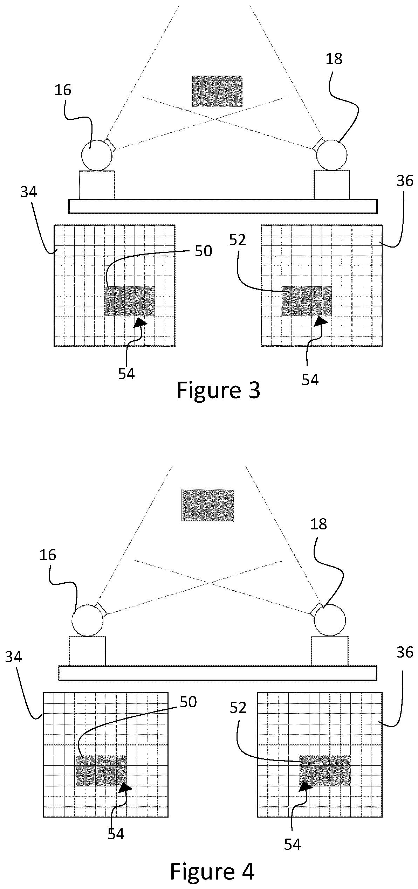

With reference to Figure 2, according to at least one embodiment, the first and second hyperspectral cameras 18, 20 (Figure 1), may acquire first and second hyperspectral images, respectively, that may be used to construct a three-dimensional point cloud 30 of a real-world environment in which an entity operates. In this example, the real-world environment includes an object 32 that has been represented by points in the three-dimensional point cloud 30. The object in this example is an armored military vehicle, e.g. a tank. The three-dimensional point cloud is constructed with reference to Figures 3 to 6.

With reference to Figures 3 and 4, The method of constructing a three-dimensional point cloud of the real-world environment in which the entity operates comprises receiving a first hyperspectral image 34 from the first hyperspectral camera 18, and a second hyperspectral image 36 from the second hyperspectral camera 20.

Next, the method comprises determining positions of regions in the first hyperspectral images and positions of the regions in the second hyperspectral images. In other words, a region 38 from the real-world environment is detected in the first hyperspectral image 34 and the second hyperspectral image 36.

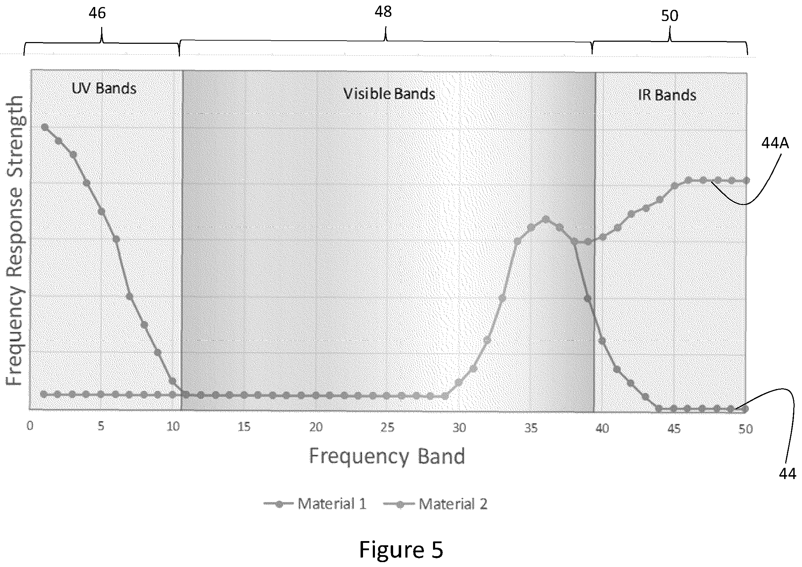

With reference to Figure 5, for each pixel of each hyperspectral image 18, 20, the method comprises constructing a hyperspectral curve, or hyperspectral signature, 44. Constructing the hyperspectral curve for each pixel of the hyperspectral image comprises dividing the hyperspectral curve into three frequency ranges. The three frequency ranges include an ultraviolet, UV, range 46, a visible light range 48, and an infrared, IR, range 50.

The hyperspectral curve 44 represents an object which has an orange colour in the visible light range. Therefore, the intensity of the curve peaks between red and yellow frequencies. The hyperspectral curve is a further peak in the UV range 46. A further hyperspectral curve 44A represents an object which has the same orange colour as the object of the hyperspectral curve 44. However, the object of the further hyperspectral curve is made from a different material and so does not have a peak in the UV range 46 but has a peak in the IR range 50 instead. For example, the material of the object of the hyperspectral curve 44 may be a plastic material, for example. The material of the object of the further hyperspectral curve 44A may be a glass material, for example.

In order to determine that the region 38 in each of the first and second hyperspectral images 34, 36, relate to the same region in the real-world environment, the method involves the following steps.

First, with reference to Figures 3 and 4, a one-to-one best match is found between hyperspectral signatures of pixels in the first hyperspectral image and pixels in the second hyperspectral image. Finding the one-to-one best match may be achieved in various ways.

For example, the one-to-one best matching pixels may be found by comparing the hyperspectral signature of each pixel of the first hyperspectral image with the hyperspectral signature of each pixel in the second hyperspectral image using a rules-based comparison algorithm. The rules-based algorithm may be an algorithm hard coded by a human programmer and is stored in the storage 24 (Figure 1). Each hyperspectral signature 44 (Figure 5) includes a plurality of frequency bands covering infrared frequencies, visible frequencies, and ultraviolet frequencies, as described with reference to Figure 5. Examples of how the rules-based algorithm compares the respective hyperspectral signatures include determining a characteristic feature of the respective hyperspectral signatures, and comparing those characteristic features. The characteristic features may include a mean intensity, a peak intensity, a peak intensity in each frequency range, a mean intensity in each frequency range, a dominant frequency at which the peak intensity occurs, a dominant frequency in each frequency range, etc.

Another way to find a one-to-one best pixel match is to apply each pixel from the respective first and second hyperspectral images to a neural network model trained to compare hyperspectral signatures of two or more pixels to determine best matches between the respective pixels of the first and second hyperspectral images. The neural network model be trained to use pairwise comparison to compare the respective signatures directly. In another embodiment, the neural network may be applied to each signature separately, and the classifications from each output may be compared. The neural network may be a convolutional neural network. The neural network may be trained using back propagation and an optimisation algorithm, e.g. gradient descent. The neural network may be trained using a plurality of hyperspectral signatures as inputs, each hyperspectral signature being labelled with a classification. The pairwise comparison example may using training data where a plurality of hyperspectral signatures are combined in different combinations with a label describing how similar the signatures are used as the output.

Another way to find a one-to-one best pixel match is to apply the pixels from the respective first and second hyperspectral images to an unsupervised machine learning model to determine best matches between the respective pixels of the first and second hyperspectral images, 34, 36. The unsupervised model may be a clustering model, e.g. k-means clustering.

Regardless as to the method used to determine the one-to-one best match described above, the method may also determine the one-to-one best match by applying one or more geometric rules to validate matched pixels based on one or more geometric constraints. The one or more geometric constraints may include chirality, maintaining direction relative to other matched pixels, or orientation relative to other matched pixels. In this way, a macro view of the pixel is taken with context used from other pixels than the pixels being compared.

It should be noted that comparing the pixels in respective images is performed on a one-to-one basis. In other words, each pixel in the first hyperspectral image 34 may be compared to every pixel in the second hyperspectral image 36.

Once the pixels have been matched to pixels of the other hyperspectral image, the pixels are identified as corresponding to the same region 54. The method also comprises determining respective positions of the matched pixels in each of the first and second hyperspectral images. For example, a first pixel 50 in the first hyperspectral image 34 that matches a first pixel 52 in the second hyperspectral image 36 may be assessed to ascertain their respective positions in their respective hyperspectral images 34, 36. In this way, the respective positions of the region 54 in each hyperspectral image 34, 36, can be determined.

It should be noted that each region 54 may be a face of an object, or part of an edge of an object. In this way, each object may be represented by multiple regions. The position of the region 54 can otherwise be called a position of a point.

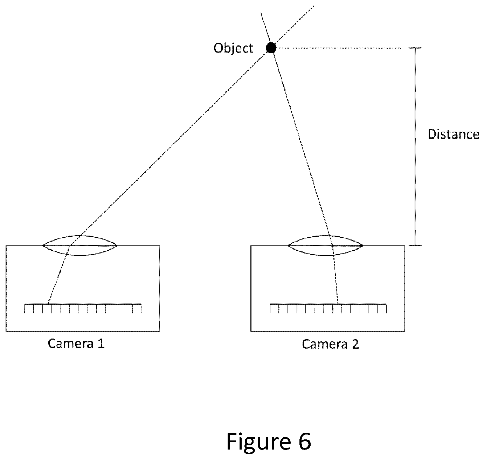

With reference to Figure 6, once the positions of the region 54 in each hyperspectral image 34, 36, is known, the method comprises determining three-dimensional positions of each region 54 based on the respective positions of the regions in each of the first and second hyperspectral images 34, 36, a separation distance between the first and second hyperspectral cameras, 18, 20, and an orientation angle of each of the first and second hyperspectral cameras 18, 20.

This may be achieved by calculating the three-dimensional positions of the matched pixels from the first and second hyperspectral images 34, 36, using the positions of the matched pixels in the first hyperspectral image, 34 the positions of the matched pixels in the second hyperspectral image, 36, the separation distance between the first and second hyperspectral cameras, 18, 20, and the orientations of the first and second hyperspectral cameras 18, 20, using trigonometry. In this way, a distance between the region and the hyperspectral cameras 18, 20, can be determined. The distance is thus the depth of the region. In this way, comprises using the calculated three-dimensional positions of the matched pixels corresponding to the region for the three-dimensional position of the region.

In other embodiments, a different approach can be used where first the matched pixels are clustered from each of the first and second hyperspectral images 34, 36, into groups.

With reference to Figures 3 and 4, each region 54 can be identified as one of the groups. It should be noted that a region is different to an object. A region may be a group of contiguous pixels which share the same properties, e.g. all made of metal, and are bounded by one or more regions having different properties to the property of the region. An object may be one or more regions that has been classified as a known object. Then the method comprises determining positions of each region 54 in each of the first and second hyperspectral images 34, 36.

Identifying each region as one of the groups may be achieved in various ways.

For example, the method may comprise comparing a geometry of the respective groups in the first and second hyperspectral images using a rules-based comparison algorithm. The rules-based algorithm may be hard coded by a human programmer. The rules-based algorithm may compare geometry of the respective groups by determining a characteristic of the groups and comparing those characteristics. The characteristics may include shape, size, and orientation of the matched regions.

In another example, the method may comprise applying the groups, from each of the respective first and second hyperspectral images, to a neural network model trained to compare groups between hyperspectral images to determine a best matched group between the hyperspectral images. The neural network may be trained to compared groups directly, e.g. using pairwise comparison. Using pairwise comparison, all groups from one hyperspectral image may be compared with each group from the other hyperspectral image. Groups which are most similar will be determined as matched groups. Another way to perform this method is to apply each group being compared to the same neural network model separately. The neural network model may be trained to classify the model. The classifications may be associated with probabilities. Groups from each image having most similar probabilities for a classification, or different classifications, may be determined as being a match.

In other example, the method may comprise applying the groups, from each of the respective first and second hyperspectral image, to an unsupervised machine learning model to determine a best matched group between the hyperspectral images. The unsupervised model may be a clustering algorithm, e.g. k-means clustering.

Regardless as to the nature of determining the matched regions, the method may also comprise validating a group as the region when one or more geometric rules are satisfied, and disregarding a group as the region when the one or more geometric rules are not satisfied. The geometric rules may include chirality of the region, maintaining direction relative to other regions, or an orientation relative to other matched regions.

Once the three-dimensional positions of the regions has been determined, the method may use those positions to construct the three-dimensional point cloud 30 to include the regions at the respective determined three-dimensional positions, as shown in Figure 2. The three-dimensional positions of the regions are obtained as above. In other words, the positions of each pixel in the region make up a group of positions associated with the region. A position of a region may not be a single point, e.g. a centroid of an entire region. Instead, the positions of each pixel making up the region may form a group of positions associated with the region.

In order to move the autonomous system of the entity 10 (Figure 1), the method may comprise classifying the one or more regions as an object 32, e.g. a tank, using a trained classifier. The trained classifier may be a neural network, or similar. The method may then comprise generating a trajectory for the autonomous system based on the classified object. For example, if the object is classified as a human, a different trajectory may be generated than if the object is classified as a tank. Based on the position of the object, and thus the trajectory, the autonomous system may then be controlled to move.

The autonomous system may be a robotic system, e.g. an autonomous driving system, or a robot arm. Similarly, the autonomous system may not move in the real world, but may automatically operate to able or disable another system.

In other embodiments, the three-dimensional point cloud may be transmitted to a display device for a human to view.

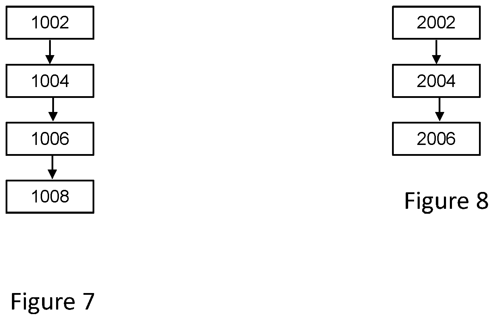

With reference to Figure 7, a computer-implemented method of constructing a three-dimensional point cloud of a real-world environment in which an entity operates can be summarised as comprising: receiving 1002 a first hyperspectral image from a first hyperspectral camera, and a second hyperspectral image from a second hyperspectral camera, wherein the first and second hyperspectral cameras are mounted to the entity; determining 1004 positions of regions in the first hyperspectral image and positions of the regions in the second hyperspectral image; determining 1006 three-dimensional positions associated with each region based on the respective positions of the regions in each of the first and second hyperspectral images, a separation distance between the first and second hyperspectral cameras, and an orientation angle of each of the first and second hyperspectral cameras; and constructing 1008 the three-dimensional point cloud to include a point at each respective determined three-dimensional positions.

With reference to Figure 8, a computer-implemented method of controlling an autonomous system of an entity may be summarised as comprising: constructing 2002 a three-dimensional point cloud of a real-world environment; classifying 2004 one of the regions as an object using a trained classifier; and operating 2006 the autonomous system of the entity based on a position of the object.

## Claims

1. A computer-implemented method of constructing a three-dimensional point cloud of a real-world environment in which an entity operates, the computer-implemented method comprising:
receiving a first hyperspectral image from a first hyperspectral camera, and a second hyperspectral image from a second hyperspectral camera, wherein the first and second hyperspectral cameras are mounted to the entity;
determining positions of regions in the first hyperspectral image and positions of the regions in the second hyperspectral image;
determining three-dimensional positions associated with each region based on the respective positions of the regions in each of the first and second hyperspectral images, a separation distance between the first and second hyperspectral cameras, and an orientation angle of each of the first and second hyperspectral cameras; and
constructing the three-dimensional point cloud to include a point at each determined three-dimensional position.

2. The computer-implemented method of Claim 1, wherein determining positions of regions in the first hyperspectral image and positions of the regions in the second hyperspectral image comprises:
finding a one-to-one best match between hyperspectral signatures of pixels in the first hyperspectral image and pixels in the second hyperspectral image;
determining respective positions of the matched pixels in each of the first and second hyperspectral images; and
identifying the matched pixels as corresponding to the region.

3. The computer-implemented method of Claim 2, wherein finding the one-to-one best match between hyperspectral signatures of pixels in the first hyperspectral image and pixels in the second hyperspectral image comprises:
applying one or more geometric rules to validate matched pixels based on one or more geometric constraints, wherein optionally the one or more geometric constraints include chirality, maintaining direction relative to other matched pixels, or orientation relative to other matched pixels.

4. The computer-implemented method of Claim 2 or Claim 3, wherein finding a one-to-one best match between pixels in the first hyperspectral image and pixels in the second hyperspectral image comprises:
comparing the hyperspectral signature of each pixel of the first hyperspectral image with the hyperspectral signature of each pixel in the second hyperspectral image using a rules-based comparison algorithm, wherein each hyperspectral signature includes a plurality of frequency bands covering infrared frequencies, visible frequencies, and ultraviolet frequencies.

5. The computer-implemented method of Claim 2 or Claim 3, wherein finding a one-to-one best match between pixels in the first hyperspectral image and pixels in the second hyperspectral image comprises:
applying each pixel from the respective first and second hyperspectral images to a neural network model trained to compare hyperspectral signatures of two or more pixels to determine best matches between the respective pixels of the first and second hyperspectral images.

6. The computer-implemented method of Claim 2 or Claim 3, wherein finding a one-to-one best match between pixels in the first hyperspectral image and pixels in the second hyperspectral image comprises:
applying the pixels from the respective first and second hyperspectral images to an unsupervised machine learning model to determine best matches between the respective pixels of the first and second hyperspectral images.

7. The computer-implemented method of Claim 2, wherein determining positions of regions in the first hyperspectral image and positions of the regions in the second hyperspectral image comprises:
clustering matched pixels from each of the first and second hyperspectral images into groups;
identifying each region as one of the groups; and
determining a position of each region in each of the first and second hyperspectral images.

8. The computer-implemented method of Claim 7, wherein identifying each region as one of the groups comprises:
validating a group as the region when one or more geometric rules are satisfied; and
disregarding a group as the region when the one or more geometric rules are not satisfied, wherein optionally the one or more geometric rules include chirality of the matched region, maintaining direction relative to other matched regions, or orientation relative to other matched regions.

9. The computer-implemented method of Claim 7 or Claim 8, wherein identifying the region as one of the groups comprises:
comparing a geometry of the respective groups in the first and second hyperspectral images using a rules-based comparison algorithm.

10. The computer-implemented method of Claim 7 or Claim 8, wherein identifying the region as one of the groups comprises:
applying the groups, from each of the respective first and second hyperspectral images, to a neural network model trained to compare groups between hyperspectral images to determine a best matched group between the hyperspectral images.

11. The computer-implemented method of Claim 7 or Claim 8, wherein identifying the region as one of the groups comprises:
applying the groups, from each of the respective first and second hyperspectral image, to an unsupervised machine learning model to determine a best matched group between the hyperspectral images.

12. The computer-implemented method of Claim 2 or any claim dependent thereon, wherein determining three-dimensional positions associated with each region based on the respective positions of the regions in each of the first and second hyperspectral images, a separation distance between the first and second hyperspectral cameras, and an orientation angle of each of the first and second hyperspectral cameras, comprises:
calculating the three-dimensional positions of the matched pixels from the first and second hyperspectral images using the positions of the matched pixels in the first hyperspectral image, the positions of the matched pixels in the second hyperspectral image, the separation distance between the first and second hyperspectral cameras, and the orientations of the first and second hyperspectral cameras using trigonometry; and
using the calculated three-dimensional positions of the matched pixels as positions of the points in the three-dimensional point cloud.

13. A computer-implemented method of controlling a autonomous system of an entity, the computer-implemented method comprising:
constructing a three-dimensional point cloud of a real-world environment using the computer-implemented method of any preceding claim;
classifying one of the regions as an object using a trained classifier; and
operating the autonomous system of the entity based on a position of the object.

14. A transitory, or non-transitory, computer-readable medium having instructions stored thereon that, when executed by one or more processors, cause the one or more processors to perform the computer-implemented method of any preceding claim.

15. An entity comprising:
a body;
a first hyperspectral camera mounted to the body;
a second hyperspectral camera mounted to the body at a separation distance from the first hyperspectral camera;
a autonomous system;
a processor; and
storage having instructions stored thereon that, when executed by the processor, cause the processor to control the autonomous system by executing the computer-implemented method of Claim 13.
